# EUROPEAN PATENT SPECIFICATION

(11) **EP 4 524 993 B1**
(45) Date of publication and mention of the grant of the patent: **25.03.2026**
(21) Application number: 24199886.3
(22) Date of filing: 11.09.2024
(51) Int. Cl.: G21C 1/03, G21C 1/22, G21C 3/54, G21C 11/06, G21C 1/02

(54) **MIXED-SPECTRUM MOLTEN SALT REACTOR (MSR)**
SCHMELZSALZREAKTOR MIT MISCHSPEKTRUM (MSR)
RÉACTEUR À SEL FONDU À SPECTRE MIXTE (MSR)

(30) Priority: 12.09.2023 US 202363537932 P; 05.09.2024 US 202418825214
(43) Date of publication of application: 19.03.2025
(73) Proprietor: Curio Solutions, LLC, Inwood, NY 11096 (US)
(72) Inventor: Miller, Laurence, Inwood 11096 (US); Wheeler, Alexander, Inwood 11096 (US); Singh, Vikram, Inwood 11096 (US); Cakez, Cemal, Inwood 11096 (US); Moskowitz, Yechezkel, Inwood 11096 (US)
(74) Representative: London IP Ltd

(56) References cited:
- WO-A2-2021/133952
- US-A1- 2009 279 658
- US-A1- 2023 005 628
- "Abstracts", INTERNATIONAL ATOMIC ENERGY AGENCY. TECHNICAL REPORT SERIES, INTERNATIONAL ATOMIC ENERGY AGENCY, VIENNA, AT, vol. 50, no. 2, 1 March 2009 (2009-03-01), pages 74 - 144, XP026000408, ISSN: 0074-1914, [retrieved on 20090303], DOI: 10.1016/J.FUELENEAB.2009.02.001

## Description

### RELATED APPLICATIONS

This application claims priority benefit of U.S. Provisional Application Serial No. 63/537,932 filed on September 12, 2023, entitled "FAST SPECTRUM MOLTEN-SALT REACTOR (MSR)". The present patent application claims the benefit under 35 U.S.C §119(e) of the aforementioned provisional application.

### TECHNICAL FIELD

This present invention relates generally to nuclear power reactors and, more particularly, the present invention relates to mixed-spectrum molten-salt reactors with an atypical core geometry.

### BACKGROUND

A molten-salt reactor (MSR) is a class of nuclear fission reactor in which the reactor fuel may also serve as the primary nuclear reactor coolant. In an MSR, the reactor fuel is a mixture of molten salt with a fissionable material. A molten-salt reactor operates by dissolving fissile material into fused ionic salts that generally include chloride or fluoride salts. The fissile-bearing fused salt produced is then circulated, either passively or actively, through a vessel referred to as a core where nuclear reactions occur, and the resultant heated salt is circulated through heat exchangers. Structures within the core may be made of light elements including beryllium, carbon, hydrogen-bearing solids, hydrogen-bearing liquids, etc., which can slow down or "moderate" neutrons from the fission reaction such that the kinetic energy of the neutrons is similar to the energy in the thermal motion of the particles constituting the fissile material. These reactors are called "thermal spectrum" MSRs. The structures in the core also form channels for the fused/molten salt to flow through. Alternatively, some molten-salt reactors forego the use of light elements in the core and opt for a core vessel devoid of interspersed structure. In these designs, the fission neutrons do not slow down, and the designs are referred to as "fast spectrum" molten-salt reactors (FSMSR).

The basic operating principle of a molten-salt reactor eliminates the potential thermal runaway or nuclear meltdown scenario, when there is an operational failure that is ever present in water-cooled reactors, because the fuel mixture is kept in a molten state. The fuel mixture is designed to drain without pumping from the core to a containment vessel in emergency scenarios, where the absence of moderator materials (for thermal spectrum) or change in the fuel's geometry (for fast spectrum), quenches the reaction. In addition, hydrogen evolution does not occur, which eliminates the risk of hydrogen explosions. MSRs operate at or close to atmospheric pressure, rather than the 75-150 times atmospheric pressure found in a typical light-water reactor (LWR). The lower operating pressures reduces the need and cost for reactor pressure vessels employed in MSRs. A low-pressure MSR does not require an expensive, steel core containment vessel, piping, and safety equipment. However, most MSR designs place radioactive fluid in direct contact with pumps and heat exchangers. The gaseous fission products (Xe and Kr) have little solubility in the fuel salt, and can be safely captured as they bubble out of the fuel, rather than increasing the pressure inside the fuel tubes, as happens in conventional reactors. MSRs may provide continuous uninterrupted operation as they can be refueled online while operating, whereas conventional reactors shut down and are offline for refueling. MSR operating temperatures are around °C (1,292 °F), and are significantly higher than traditional LWRs at around 300 °C (572 °F). The ability to refuel while the MSR is in operation, as well as the higher operating temperature increases electricity-generation efficiency/availability and process-heat opportunities for generation of steam to run electrical generators.

While molten-salt reactors offer many advantages, a few of which were noted above, there are challenges and disadvantages with MSR as well. In circulating-fuel-salt designs, radionuclides dissolved in fuel contact equipment such as pumps and heat exchangers, potentially requiring fully remote maintenance. MSR designs often rely on expensive nickel alloys to contain the molten salt, and these alloys may be prone to embrittlement under high neutron flux. The molten salts employed in MSR may present a corrosion risk, and these molten salts require careful management of their oxidation states to manage the corrosion risks. Examples of corrosion risks include dissolution of chromium by liquid fluoride thorium salts at greater than 700 °C (1,292 °F) that may endanger stainless steel components. Neutron radiation may transmute common alloying agents such as Co and Ni, shortening their lifespan, and may cause damage to solid moderator materials that limits the core lifetime. Lithium salts such as FLiBe may warrant the use of Li-7 to reduce tritium generation which can permeate stainless steels, may cause embrittlement, and may escape into the environment.

US Patent Application No. 2023/005628A1 describes a molten salt reactor system that utilises a closed-vessel configuration. The reactor is designed for passive safety and includes a suspended container housing a salt mixture comprising fissile material. The container is positioned within an enclosure and may be tilted or rotated to control the extent of interaction between the salt mixture and surrounding moderator or control materials. The reactor is intended to operate under atmospheric or near-atmospheric pressure and is configured to provide thermal energy for downstream use. However, tilting the entire reactor is cumbersome and imprecise. Further, US Patent Application No. 2023/005628A1 does not address the corrosion or embrittlement of materials exposed to high neutron flux or molten salt.

In the Abstract 'An analytical solution for the general perturbative diffusion equation by integral transform techniques', de Vilhena et al, International Atomic Energy Agency, Technical Report Series, International, Atomic Energy Agency, Vienna, vol. 50, no.2, 1 March 2009, provides an analytical approach to solving a generalised perturbative diffusion equation for coupled fast and thermal neutron groups. The analysis is carried out within a simplified rectangular two-dimensional geometry using a two-step integral transform technique. The work focuses on the mathematical treatment of neutron diffusion using general perturbation theory and validates the analytical results against finite difference solutions. The disclosure is theoretical in nature and does not address the maintenance of a reactor, or the corrosion or embrittlement of materials exposed to high neutron flux or molten salt.

While there have been many advancements in nuclear reactor technology, there continues to be a need for improved molten-salt reactors that provide safer operational advantages over existing water cooled nuclear reactors.

### SUMMARY

According to an embodiment of the disclosure, a mixed-spectrum molten-salt reactor is provided according to claim 1.

### BRIEF DESCRIPTION OF THE DRAWINGS

The present invention is further detailed with respect to the following drawings that are intended to show certain aspects of the present invention, but should not be construed as a limit on the practice of the present invention.
FIGS. 1A and 1B illustrate a neutron flux distribution along different planes in a core in accordance with embodiments of the invention;
FIG. 2 is a diagram of an integral configuration of a mixed-spectrum molten-salt reactor (MXMSR) in accordance with embodiments of the invention;
FIG. 3 is a diagram of a loop-type configuration of a mixed-spectrum molten-salt reactor (MXMSR) in accordance with embodiments of the invention;
FIGS. 4A-4C are top-down cross-sectional views of a primary reactor vessel showing geometries of a primary core as an elliptical cross-section ellipsoid geometry, a hyperbolic cross-section biconcave geometry, and a rectangular slab-like cross-section parallelepiped geometry, respectively, in accordance with embodiments of the invention;
FIG. 5A is a side view of a control element in the form of a control plate for use with embodiments of the invention;
FIG. 5B is an exploded view of FIG. 5A where a plate made of boron carbide is sandwiched between plates of stainless steel;
FIG. 6 is a front view of the control plate of FIG. 5A placed within a stainless-steel frame with a set of rails;
FIG. 7 illustrates a rack and pinion system with an electromagnetic actuator for raising and lowering the control plate in embodiments of the invention;
FIG. 8 is a side cross-sectional view of a generic reactor vessel with a removable cover and control plates in accordance with embodiments of the invention; and
FIG. 9 is a graph of nominal neutron spectrum in the generic reactor vessel of FIG. 8.

It is understood that like reference characters refer to like elements throughout the several figures.

### DETAILED DESCRIPTION

A mixed-spectrum molten-salt reactor (MXMSR) is provided. The MXMSR has a primary containment vessel, and a reactor core housed in the primary containment vessel. The reactor core has an atypical geometry that holds a fuel salt. The atypical geometry of the reactor core has a rectangular slab-like cross-section parallelepiped geometry, a hyperbolic cross-section biconcave geometry, a hyperbolic cross-section hourglass geometry, or an elliptical cross-section ellipsoid geometry. A blanket region within the primary containment vessel surrounds the reactor core, the blanket region having a blanket salt. The fuel salt includes a mixture of actinides recovered from used nuclear fuel recycling as a fissile material driver, and a carrier salt that includes a chloride or fluoride salt mixture that has a high actinide-halide solubility and a sufficiently low melting point. The fuel in the carrier salt is composed of halide compounds of uranium, plutonium, neptunium, americium, and curium in varying compositions.

The blanket region has chambers or compartments on sides of the reactor core where neutron leakage is intentionally allowed. The chambers or compartments are adapted for the insertion and removal of control elements that include plates, rods, or drums. The control plate is formed of compounds of neutron-absorbing material such as boron that is either alloyed with or sandwiched between a set of stainless-steel plates and fashioned into a plate design that conforms to a shape of a peripheral region of the reactor core geometry including rectangular plate, parabolic cross-section plate, hyperbolic cross-section plate, and can move freely in the control plate compartment. The stainless-steel control plate is held above the compartment using electromagnetic forces from electromagnets. The control element is passively inserted without operator intervention once a control signal is lost, or a shutdown signal is received.

The interior surfaces of the primary containment vessel are lined with a neutron reflector material where the neutron reflector material is graphite, or is one of beryllium oxide, zirconium hydride, yttrium hydride, molten lead, or molten Pb-Bi eutectic that is enclosed in a cladding made of a material that corresponds the primary containment vessel.

The blanket region further includes neutron moderating materials. The neutron moderating materials include graphite blocks subjected to a surface treatment with pyrolytic carbon at high temperature to reduce surface roughness and porosity, or one of zirconium hydride or deuteride, yttrium hydride or deuteride, sodium hydroxide or deuteroxide, lithium hydroxide or deuteroxide, and silicon carbide enclosed in cladding made of material that corresponds the primary containment vessel.

Transmutation ports are provided either for the production of a desired isotope, or the elimination of an isotope. These ports accept specially fashioned targets composed of the material of interest. Where desirable, isotopes can also be dissolved into the blanket salt and homogeneously distributed in the blanket region where transmutation can occur over time.

The reactor further includes a core heat exchanger in fluid communication with the reactor core and a blanket heat exchanger in fluid communication with the blanket region. The reactor core is connected to the core heat exchanger via ducts or channels, and the fuel salt is circulated either through natural or forced convection via a core pump, and the blanket salt is circulated through the blanket heat exchanger via the blanket pump, and coolant streams from both the core heat exchangers and the blanket heat exchangers are combined and circulated through a secondary heat exchanger.

The reactor has a removable cover, where the removable cover and the core provide machined spaces that accommodate inlet and outlet ducts/piping including a fuel inlet, a fuel outlet, a blanket inlet, a blanket outlet, and a drain.

Embodiments of the inventive mixed-spectrum molten-salt reactor differ from existing core designs in that an atypical core geometry is utilized. Generic MSR designs employ a core region with a single cylindrical geometry with a circular axial cross-section. While the invention disclosed herein can also take the form of simple concentric cylinders, embodiments of the disclosed design for an atypical core region, include, but are not limited to, a rectangular slab-like cross-section parallelepiped geometry, a hyperbolic cross-section biconcave geometry, a hyperbolic cross-section hourglass geometry, an elliptical cross-section ellipsoid geometry, and so on. In embodiments, a primary containment vessel hosts the core vessel with a volume of space outside the core forming the "blanket" region.

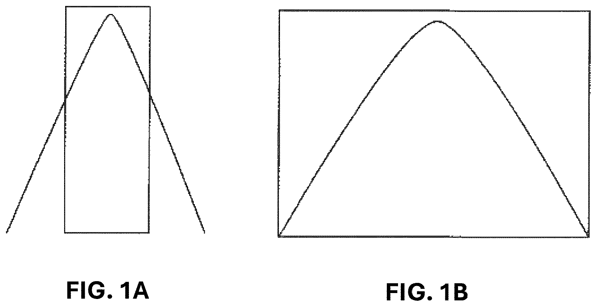

Furthermore, while existing MSR designs have a core geometry that minimizes neutron leakage, embodiments of the disclosed design utilize the core geometry to optimize neutron leakage such that the leaking neutrons can be employed in the blanket region to convert fertile material into fissile material and for transmutation to either create or destroy specific isotope targets. This neutron balance is enabled by the atypical geometry of the core coupled with the high neutron yield of the transuranic fuel in a fast-neutron spectrum. In the aforementioned geometries, the intensity of neutron radiation, characterized by the rate of flow of neutrons known as neutron flux is uniquely distributed. For a given geometry, the dimensions are chosen such the neutron flux at a boundary diminishes. The dimension of the other axis is varied until a critical geometry is attained. An example of a nominal fast neutron flux distribution is shown in FIGS. 1A and 1B that illustrate neutron flux distribution along different planes in an embodiment of the disclosed MXMSR.

In embodiments, the core region is homogeneous and devoid of any structures within the volume enclosed by the vessel wall. The fuel in the carrier salt is composed of halide compounds of uranium, plutonium, neptunium, americium, and curium in varying compositions. The salt in the blanket region may utilize halide compounds of natural or depleted uranium, or thorium as fertile material, or other halide compounds for transmutation.

The atoms in any material undergo interactions with neutrons with most interactions being physical collisions where kinetic energy and momentum are exchanged. This fact coupled with the knowledge that neutrons are lighter than any atomic nucleus except H-1 hydrogen means that all atoms are neutron "reflectors". In embodiments of the invention, the neutron leakage along one of the axes of the core region provides the opportunity to control the chain reaction by varying the number of neutrons that are allowed to reflect from the blanket region back into the core. That is, a suitable material capable of absorbing neutrons can be used in the periphery adjacent to the face where neutron leakage has been intentionally encouraged for a tailored neutron flux. Thus, embodiments of the disclosed design include chambers or compartments on those sides of the core vessel where neutron leakage is intentionally allowed. These compartments enable the insertion of control elements for example by raising plates, rods, drums, etc.

In embodiments, the control elements and the housing compartment are arranged such that the control elements can move within the compartment without obstruction under all operating conditions. In a specific embodiment, the control elements are plates formed of compounds of boron such as boron carbide, or any other suitable neutron absorber, that is either alloyed with or sandwiched between plates of stainless steel and fashioned into a plate design that conforms to the shape of the peripheral region of the core geometry illustratively including rectangular plate, parabolic cross-section plate, hyperbolic cross-section plate, etc. and can move freely in the control plate compartment. In this embodiment, the plates may be housed in an overpack made from stainless steel or some other compatible material. In this embodiment, the plates may also be divided into two or more segments with each segment occupying space in the compartment adjacent to the other segment and covering a corresponding segment of the face of the core region periphery. Each segment is capable of being moved independently to control the rate of the chain reaction.

In embodiments, the control element may be designed to be passively inserted without operator intervention once a control signal is lost, or a shutdown signal is received. In a specific embodiment, the control plates with the stainless-steel housing are held above the compartment using electromagnetic forces. Upon receiving a safety control rod axe man or safety cut rope axe man (SCRAM) signal or in the event of loss of station power in the facility, the electromagnets disengage, and the control plates immediately fall into the control compartment which shuts down the chain reaction.

Embodiments of the disclosed design employ a primarily fast spectrum in the reactor core region. However, the blanket region provides the opportunity to utilize a neutron spectrum most amenable to facilitating nuclear transmutations. Since the probability of neutron interaction increases for most atomic nuclei as the kinetic energy of the neutron decreases, it is desirable to utilize this property to increase transmutations. In embodiments of the disclosed design, the blanket region is provided with structures containing neutron moderating materials.

In embodiments, the core region is provided with a system of devices for circulating molten salt. These circulating devices can take the form of one or more pumps and a plurality of ducts connected to integrated heat exchangers. Alternatively, the molten salt may travel out of the core region using a plurality of nozzles and pumps forming loops connected to heat exchangers. The ducts and nozzles are incorporated into the vessel design so as to prevent formation of vortices/eddies in the flow of the molten salt for all normal operating conditions. Heat generated in the reactor is efficiently transferred from the salt in the core region to a secondary coolant fluid via one or more heat exchangers. The salt may be transported either by natural convection or forced flow. The heat exchangers are designed to optimize heat transfer from the hot salt to the coolant fluid while also providing a barrier to fission product migration. For the disclosed design, some embodiments of the heat exchangers configuration could include shell-and-tube, tube-in-tube, printed circuit, and so on. The heat exchangers may also channel the hot salt and coolant liquid to have a desirable flow configuration. Some embodiments of the flow configuration may be concurrent, countercurrent, crossflow, cross/counter flow, and so on. In embodiments, similar heat exchangers may be used to cool the banket salt, although only a small fraction of the power is generated in the blanket region. The coolant fluid streams of both the core and blanket heat exchangers can be passed through a single secondary heat exchanger whose working fluid may be any of air, water, helium, carbon-dioxide, nitrogen, nitrogen tetroxide (N₂O₄), aluminum chloride (AlCl₃), etc.

It is to be understood that in instances where a range of values are provided that the range is intended to encompass not only the end point values of the range but also intermediate values of the range as explicitly being included within the range and varying by the last significant figure of the range. By way of example, a recited range of from 1 to 4 is intended to include 1-2, 1-3, 2-4, 3-4, and 1-4.

Unless otherwise defined, all technical and scientific terms used herein have the same meaning as commonly understood by one of ordinary skill in the art to which this invention belongs. The terminology used in the description of the invention herein is for the purpose of describing particular embodiments only and is not intended to be limiting of the invention.

Unless indicated otherwise, explicitly or by context, the following terms are used herein as set forth below.

As used in the description of the invention and the appended claims, the singular forms "a," "an" and "the" are intended to include the plural forms as well, unless the context clearly indicates otherwise.

Also as used herein, "and/or" refers to and encompasses any and all possible combinations of one or more of the associated listed items, as well as the lack of combinations when interpreted in the alternative ("or").

The preferred embodiments of the present invention will be hereinafter described with reference to the figures.

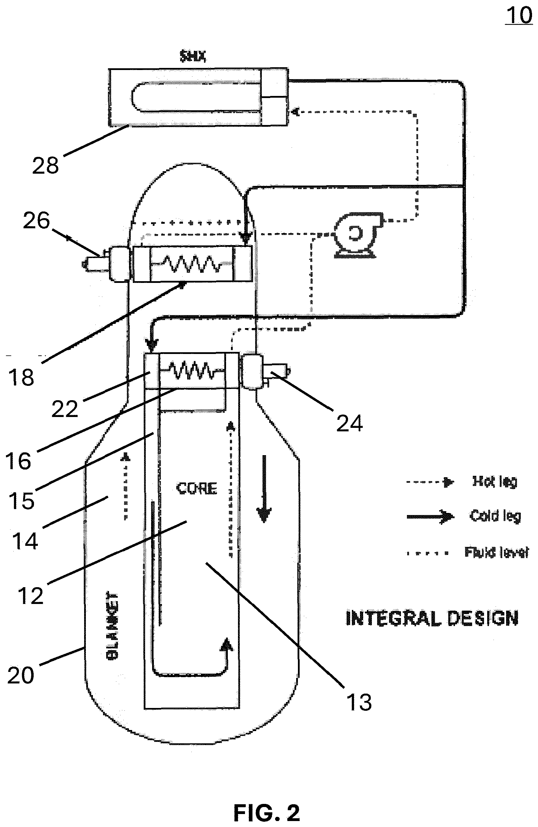

FIG. 2 shows a diagram of a reactor 10 in an integral configuration. In this approach, the core 12, blanket/blanket salt 14, and associated core heat exchanger 16 and blanket heat exchanger 18 are enclosed in a single primary containment vessel 20. The core vessel 20 is connected to the heat exchangers (16, 18) via ducts 22, and the fuel salt 13 may circulate either through natural or forced convection via core pump 24 and/or blanket pump 26. The core 12 is provided with an annular baffle structure 15 forming a downcomer from the cold leg of the heat exchanger to allow a thermal hydraulically efficient flow. The blanket salt 14 is circulated through its own blanket heat exchanger 18 via blanket pump 24 where the core vessel 20 itself forms a diverter enabling thermally efficient flow. The coolant streams from both the core heat exchangers 16 and blanket heat exchangers 18 are combined and circulated through a secondary heat exchanger 28. The principal advantages of the integral configuration from a reactor physics perspective are: (1) lower overall fissile loading, (2) higher retention of delayed neutron precursors in the neutron important region of the reactor core 12, and (3) compact profile.

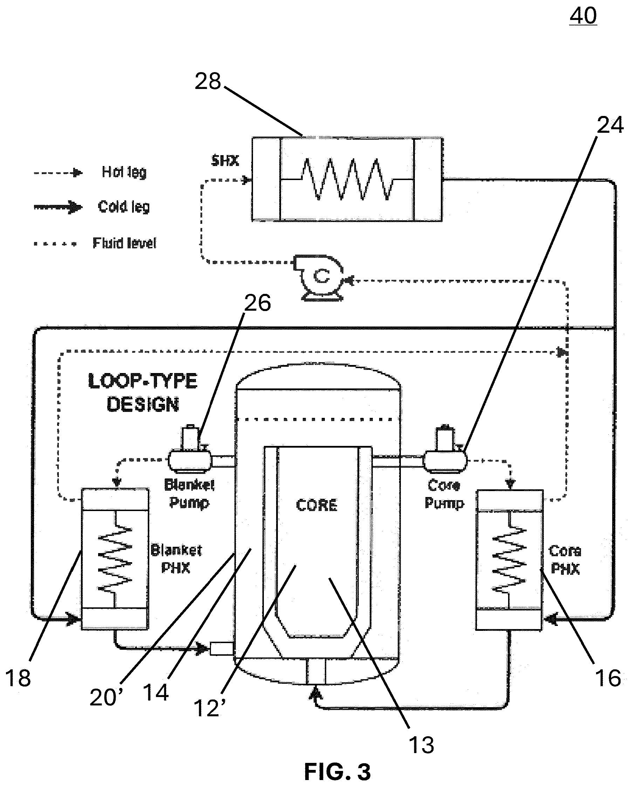

FIG. 3 shows a diagram of a reactor 40 in a loop-type configuration. The principal distinguishing characteristic of the loop-type reactor approach versus an integral reactor approach is that the heat exchangers (16, 18) are mounted outside the primary containment vessel 20'. This means that the fuel 13 and blanket salt 14 are circulated through their respective heat exchangers via pipes with either forced or natural convection. Since at any given moment a portion of the salt is resident in the heat exchangers (16, 18) and piping away from the reactor core 12', a larger fissile loading is necessary in such configurations. As a corollary, a larger fraction of the delayed-neutron precursors undergo their neutron yielding decay outside the reactor core 12'. Advantages of this approach are: (1) better thermal hydraulics performance over a broader range of reactor parameters, and (2) ease of access for reactor maintenance.

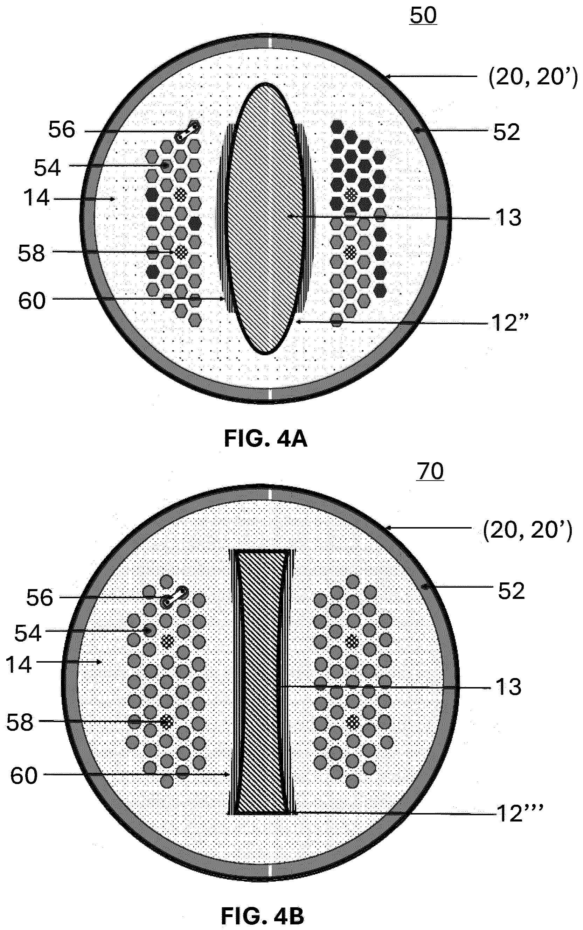

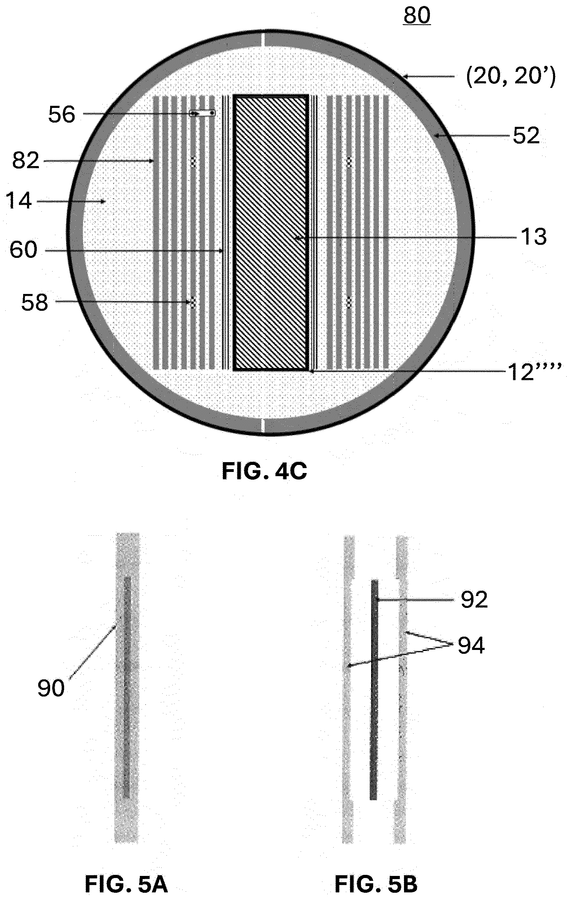

FIGS. 4A-4C are top-down cross-sectional views of embodiments (50, 70, 80) of a primary reactor vessel (20, 20') lined with a neutron reflector 52 on the interior surface of the walls of the primary reactor vessel (20, 20') showing atypical geometries of the primary core 12 as an elliptical cross-section ellipsoid geometry 12", a hyperbolic cross-section biconcave geometry 12‴, and a rectangular slab-like cross-section parallelepiped geometry 12ʺʺ, respectively. The primary vessel (20, 20') may be constructed of various compatible metal alloys. Some iron-base alloys illustratively include Inconel-625, Hastelloy-N, etc. Molybdenum-based alloys such as TZM, Haynes-214, Monel, MoNiCr, etc., may also be used in the construction of the primary reactor vessel (20, 20'). The primary reactor vessel (20, 20') is protected from neutron embrittlement by being provided with the neutron reflecting material 52. This neutron reflector 52 must be compatible with the molten-salt environment. Graphite could be used without a cladding material as it does not react with molten salts. Alternatively, beryllium oxide, zirconium hydride, yttrium hydride, molten lead, molten Pb-Bi eutectic etc., may be used in a cladded enclosure made of the same material as the primary vessel. The choice of neutron reflector 52 depends on the tailored neutron spectrum for the reactor as built and the choice of primary vessel material so as to prevent radiation-induced swelling or activation products of concern.

The three atypical core vessels (12", 12‴, 12ʺʺ) may be made from the same alloys as described for the primary vessel (20, 20') above. It is appreciated that the material used for constructing the primary vessel and core vessel need not necessarily be the same. The core vessel experiences a high level of fast neutron flux which will limit its working lifetime. Therefore, the core vessel is designed to be replaced as necessary.

The core vessel (12", 12‴, 12ʺʺ) holds the fuel salt 13. Various compositions for the fuel salt 13 may be used illustratively including, but are not limited to:

LiF-ThF₄-PuF₃

LiF-ThF₄-UF₄-PuF₃ with U enriched in U-235 up to 20 wt.%

NaCl-PuCl₃

NaCl-MgCl₂-PuCl₃

NaCl-ThCl₄-PuCl₃

LiCl-KCl-PuCl₃

These compositions are representative of examples in the literature, and for which neutronics calculations have been performed by the inventors. The PuCl₃ may be replaced with a mixture of transuranics. An example composition of the transuranics, not limited to the same is: 39.5 wt.% Uranium (containing up to 1 wt.% U-235 isotope), 2 wt.% Neptunium, 36.5 wt.% Plutonium, 6.5 wt.% Americium, and 0.2 wt.% Curium. The isotopic composition of the individual elements will depend on the specifics of the used nuclear fuel from which the transuranics are sourced.

The volume outside the core vessel (12", 12‴, 12ʺʺ) but enclosed by the primary containment vessel (20, 20') is filled with blanket salt 14. The carrier salt for the blanket may or may not be the same as the fuel salt 13 composition. Some blanket salt 14 compositions illustratively include, but are not limited to:

NaCl-ThCl₄

NaCl-UCl₃

LiF-ThCl₄

LiF-ThCl₄

Certain "target" elements for transmutation either for the production of a desired isotope, or the elimination of an isotope may be dissolved into the blanket salt 14 or fashioned into suitable "targets" that can be introduced into the neutron flux in the blanket region via transmutation ports 58. One such example is the transmutation of I-129 which may be incorporated into the blanket salt 14 in the form of sodium or lithium iodide. Similarly, the production of Co-60 can be achieved by fashioning targets of Cobalt-59 and introduced into the flux in the blanket salt 14 by way of transmutation ports 58.

The blanket region may or may not incorporate neutron moderating structures. A variety of different embodiments of neutron moderating structures (54, 82) are shown in FIGS. 4A-4C. The moderating structures (54, 82) shown are independent of the geometry of the core vessel (12", 12‴, 12ʺʺ) and are shown for illustration only, and more than one type of geometrical structure for the moderator blocks may be employed in the same reactor.

The moderator structures or blocks are made of light elements. Graphite may be used without the need for cladding. In this case, the graphite blocks would be subjected to surface treatment with pyrolytic carbon at high temperature to reduce surface roughness and porosity. A variety of other moderating materials may be used with appropriate cladding illustratively including, but not limited to: zirconium hydride or deuteride, yttrium hydride or deuteride, sodium hydroxide or deuteroxide, lithium hydroxide or deuteroxide, silicon carbide, etc. The moderator structures or blocks are held in place with grid spacers 56 that are in turn arranged and held in place via a hold-down plate that may or may not be a permanent part of a removable vessel cover. The securement with the grid spacers 56 and hold down plate ensures that the moderator structures or blocks cannot move during reactor operation and prevents any changes in reactivity caused by changes in the relative arrangement or distance of the moderator blocks from the core vessel.

The core vessel's (12", 12‴, 12ʺʺ) periphery is provided with control compartments 60 for the insertion of control elements. FIG. 5A shows one possible embodiment of control elements in the form of control plates 90. In this case, a plate 90 made of boron carbide 92 is sandwiched between plates of stainless steel 94 as best shown in exploded view FIG. 5B of FIG. 5A.

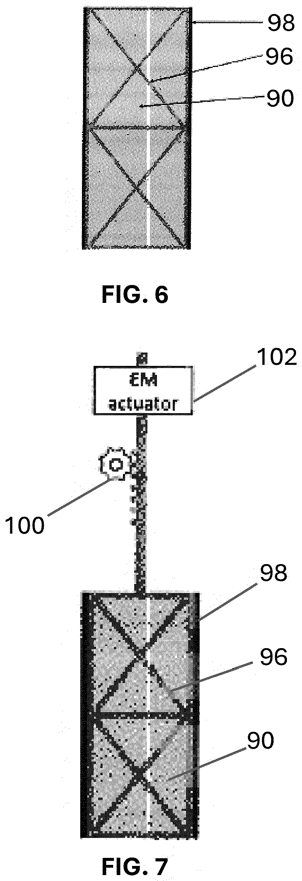

The control plate 90 is formed as a single continuous unit. As shown in FIG. 6, the control plate 90 may in turn be placed within a stainless-steel frame 96 with a set of rails 98. The control compartment is provided with tracks for the rails 98 which ensures that the control plate 90 may be inserted and removed smoothly. FIG. 7 illustrates a rack and pinion system 100 for raising and lowering the control plate 90 that is controlled by a drive mechanism illustratively including an electromagnetic (EM) drive 102. The EM drive 102 receives control signals from an operator. In the event of a loss of station power, the EM drive 102 disengages and the control plates 90 fall into the control compartment with the rails providing a defined travel path and the rack and pinion system 100 providing some inertia to control the rate of fall.

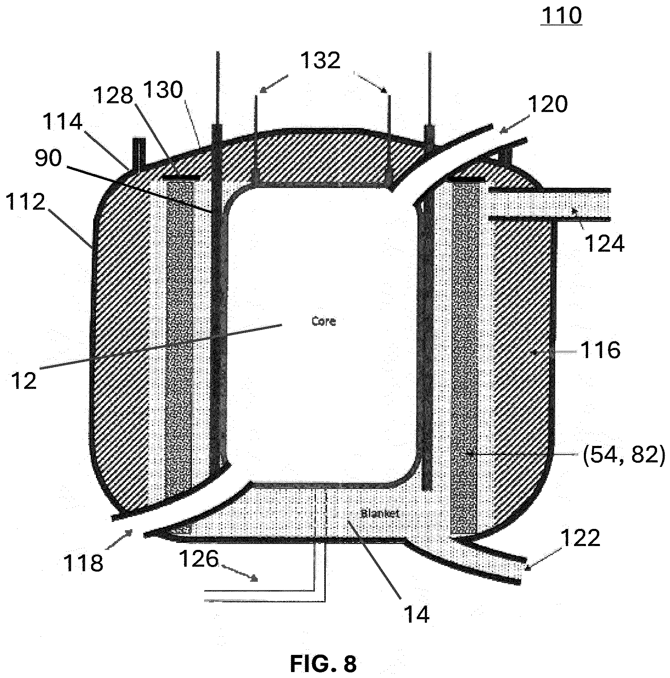

FIG. 8 is a side view of a generic embodiment 110 of the disclosed inventive design. The containment vessel 112 is provided with a removable cover 114 at the top. The space above the vessel consists of shielding material and is part of the facility enclosure. The removable cover 114 incorporates vessel reflector blocks 116 that may be made of graphite or stainless steel that are shaped to be part of the cover 114. The removable cover 114 and the core 12 provide machined spaces that can accommodate inlet and outlet ducts/piping including a fuel inlet 118, a fuel outlet 120, a blanket inlet 122, a blanket outlet 124, and a drain 126. The inlet and outlet ducts/piping allows for movement of the fuel salt. The drain line 126 at the bottom of the core vessel 12 is provided since the reactor is fueled with a liquid, the fuel salt can be drained from the reactor during routine maintenance and in the case of abnormal events. The cover 114 also incorporates a hold-down plate 128 that connects to the grid spacers on top of the moderator blocks (54, 82). The control plates 90 fall into the control plate compartment 130. Lifting ports 132 are used to lift the core vessel 12 from the containment vessel 112. The lifting ports 132 may be fitted with screw hooks to lift the core vessel 12 during both installation and replacement. The blanket 14 surrounds the core 12.

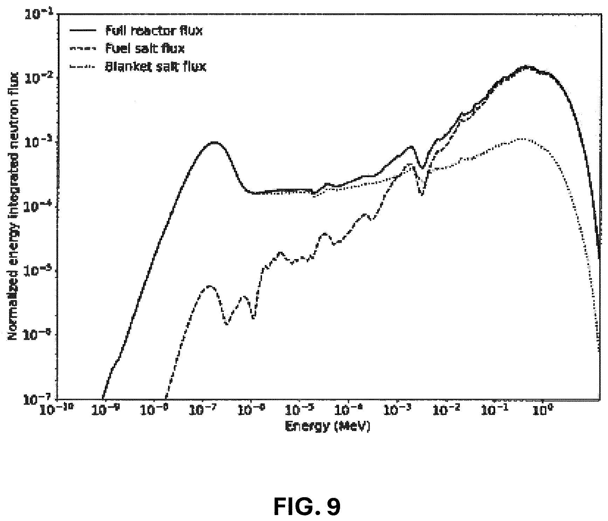

FIG. 9 is a graph that shows the nominal neutron spectrum in the disclosed reactor design. The neutron flux shown is for a generic design with neutron interaction signatures having peaks and valleys that will change as the composition of the reactor changes. In the graph shown in FIG. 9, the flux is normalized to unity. In embodiments of the inventive reactor, the core vessel containing the fuel salt displays a fast (or hard) neutron spectrum. Meanwhile, the blanket region with the blanket salt and neutron moderators displays a thermalized (or softer) neutron spectrum. The fast neutron flux in the fuel salt is an order of magnitude higher than the blanket salt. Similarly, the thermal neutron flux in the blanket salt is over two orders of magnitude greater than the fuel salt.

The present invention has utility as mixed-spectrum molten-salt reactors (MXMSR) that are designed to utilize a mixture of actinides recovered from used nuclear fuel recycling as a fissile material driver. The reactor designs disclosed may operate using a chloride or fluoride salt mixture as the carrier salt with high actinide-halide solubility and a sufficiently low melting point. Non-limiting examples of chlorides may include NaCl, NaCl-KCl, LiCl-KCl, etc., while non-limiting examples of fluorides may include LiF, LiF-NaF, etc. Embodiments of the MXMSR design may have two distinct regions, a core region and a blanket region. The core region is where the fission reactions primarily occur in the carrier salt containing fissile material. The blanket region is a peripheral region where a carrier salt containing materials for neutron-activated transmutation occurs.

It can be seen that the present invention improves the performance when compared to fastspectrum molten-salt reactors through the use of an atypical core geometry. Furthermore, while existing MSR designs have a core geometry that minimizes neutron leakage, embodiments of the disclosed design utilize the core geometry to optimize neutron leakage such that the leaking neutrons can be employed in the blanket region to convert fertile material into fissile material and for transmutation to either create or destroy specific isotope targets. This neutron balance is enabled by the atypical geometry of the core coupled with the high neutron yield of the transuranic fuel in a fastspectrum design.

While the preferred embodiments of the present invention have been disclosed herein, it will be appreciated that modification of these particular embodiments of the invention may be resorted to without departing from the scope of the invention as found in the appended claims.

Various modifications of the present invention, in addition to those shown and described herein, will be apparent to those skilled in the art of the above description. Such modifications are also intended to fall within the scope of the appended claims.

The foregoing description is illustrative of particular embodiments of the invention, but is not meant to be a limitation upon the practice thereof. The following claims are intended to define the scope of the invention.

## Claims

1. A mixed-spectrum molten-salt reactor (10) comprising:
a primary containment vessel (20, 20');
a reactor core (12) housed in the primary containment vessel (20, 20'), the reactor core (12) that holds a fuel salt (13); and
a blanket region within the primary containment vessel (20, 20') and surrounding the reactor core (12), the blanket region comprising a blanket salt (14),
***characterized in that***
the reactor core (12) has an atypical geometry, the atypical geometry comprises one of: a rectangular slab-like cross-section parallelepiped geometry, a hyperbolic cross-section biconcave geometry, a hyperbolic cross-section hourglass geometry, or an elliptical cross-section ellipsoid geometry.

2. The reactor (10) of any previous claim wherein the fuel salt (13) comprises a mixture of actinides recovered from used nuclear fuel recycling as a fissile material driver, and a carrier salt comprising a chloride or fluoride salt mixture that has a high actinide-halide solubility and a sufficiently low melting point, wherein fuel in the carrier salt is composed of halide compounds of uranium, plutonium, neptunium, americium, and curium in varying compositions and the chloride mixture comprises at least one of NaCl, NaCl-KCl, and LiCl-KCl and.

3. The reactor (10) of claim 2 wherein the fluoride mixture comprises at least one of LiF and LiF-NaF.

4. The reactor (10) of any previous claim wherein the blanket salt (14) comprises halide compounds of natural or depleted uranium, or thorium as fertile material, or other halide compounds for transmutation.

5. The reactor (10) of claim 4 wherein the blanket salt (14) further comprises NaCl-ThCl₄, NaCl-UCl₃, LiF-ThCl₄, or LiF-ThCl₄.

6. The reactor (10) of any previous claim wherein the blanket region further comprises chambers or compartments (60) on sides of the reactor core (12) where a neutron leakage is intentionally allowed, wherein the chambers or compartments (60) are adapted for the insertion and removal of control elements (90) that comprise control plates, control rods, or control drums.

7. The reactor (10) of claim 6 wherein the control plates (90) are formed of neutron absorbing elements that is either alloyed with or sandwiched between a set of plates and fashioned into a plate design that conforms to a shape of a peripheral region of the reactor core geometry including rectangular plate, parabolic cross-section plate, hyperbolic cross-section plate, and can move freely in the control plate compartment, the control plate is held above the compartment using electromagnetic forces from electromagnets.

8. The reactor (10) of claim 6 wherein the control element (90) is passively inserted without operator intervention once a control signal is lost, or a shutdown signal is received.

9. The reactor (10) of any previous claim wherein interior surfaces of the primary containment vessel (20, 20') are lined with a neutron reflector material (52).

10. The reactor (10) of claim 9 wherein the neutron reflector material (52) is graphite.

11. The reactor (10) of claim 9 wherein the neutron reflector material (52) comprises one of beryllium oxide, zirconium hydride, yttrium hydride, molten lead, or molten Pb-Bi eutectic that is enclosed in a cladding made of a material that corresponds the primary containment vessel (20, 20').

12. The reactor (10) of any previous claim wherein target elements either for the production of a desired isotope, or the elimination of an isotope is one of dissolved into the blanket salt (14) or fashioned into a target that is introduced into a neutron flux in the blanket region.

13. The reactor (10) of any previous claim wherein the blanket region further comprises neutron moderating materials (54, 82), wherein the neutron moderating materials (54, 82) comprise graphite blocks subjected to a surface treatment with pyrolytic carbon at high temperature to reduce surface roughness and porosity, zirconium hydride or deuteride, yttrium hydride or deuteride, sodium hydroxide or deuteroxide, lithium hydroxide or deuteroxide, and silicon carbide.

14. The reactor (10) of any previous claim further comprising a core heat exchanger (16) in fluid communication with the reactor core (12) and a blanket heat exchanger (18) in fluid communication with the blanket region; and
wherein the reactor core (12) is connected to the core heat exchanger (16) via ducts (22), and the fuel salt (13) is circulated either through natural or forced convection via a core pump (24) and/or a blanket pump (26), and the blanket salt (14) is circulated through the blanket heat exchanger (18) via the blanket pump (26), and coolant streams from both the core heat exchangers (16) and the blanket heat exchangers (18) are combined and circulated through a secondary heat exchanger;
wherein the core heat exchanger (16) and blanket heat exchanger (18) are enclosed in the primary containment vessel (20, 20').

15. The reactor (10) of any previous claim further comprising a removable cover (114), and where the removable cover (114) and the core (12) provide machined spaces that accommodate inlet and outlet ducts/piping including a fuel inlet (118), a fuel outlet (120), a blanket inlet (122), a blanket outlet (124), and a drain (126).

## Patentansprüche

1. Ein Schmelzsalzreaktor mit gemischtem Neutronenspektrum (10), umfassend:
einen primären Sicherheitsbehälter (20, 20');
einen Reaktorkern (12), der im primären Sicherheitsbehälter (20, 20') untergebracht ist, wobei der Reaktorkern (12) ein Brennstoffsalz (13) enthält; und
eine Blanket-Region innerhalb des primären Sicherheitsbehälters (20, 20'), die den Reaktorkern (12) umgibt, wobei die Blanket-Region ein Blanket-Salz (14) umfasst,
***dadurch gekennzeichnet, dass***
der Reaktorkern (12) eine atypische Geometrie aufweist, wobei die atypische Geometrie eines aus Folgendem umfasst: eine Parallelepiped-Geometrie mit rechteckigem, plattenförmigem Querschnitt, eine bikonkave Geometrie mit hyperbolischem Querschnitt, eine Sanduhr-Geometrie mit hyperbolischem Querschnitt oder eine ellipsoide Geometrie mit elliptischem Querschnitt.

2. Reaktor (10) nach einem der vorstehenden Ansprüche, wobei das Brennstoffsalz (13) ein Gemisch aus Aktiniden umfasst, die aus der Wiederaufbereitung abgebrannter Kernbrennstoffe zurückgewonnen wurden und als spaltbare Treibmittel dienen, sowie ein Trägersalz, das ein Chlorid- oder Fluoridsalzgemisch mit hoher Löslichkeit für Aktinid-Halogenide und einem ausreichend niedrigen Schmelzpunkt umfasst, wobei der Brennstoff im Trägersalz aus Halogenidverbindungen von Uran, Plutonium, Neptunium, Americium und Curium in unterschiedlichen Zusammensetzungen besteht und das Chloridgemisch mindestens eines aus NaCl, NaCl-KCl oder LiCl-KCl umfasst.

3. Reaktor (10) nach Anspruch 2, wobei das Fluoridgemisch mindestens eines aus LiF und LiF-NaF umfasst.

4. Reaktor (10) nach einem der vorstehenden Ansprüche, wobei das Blanket-Salz (14) Halogenidverbindungen aus natürlichem oder abgereichertem Uran oder Thorium als Brutmaterial sowie weitere Halogenidverbindungen für eine Transmutation umfasst.

5. Reaktor (10) nach Anspruch 4, wobei das Blanket-Salz (14) ferner NaCl-ThCl₄, NaCl-UCl₃, LiF-ThCl₄ oder LiF-ThCl₄ umfasst.

6. Reaktor (10) nach einem der vorstehenden Ansprüche, wobei die Blanket-Region ferner Kammern oder Kompartimente (60) an Seiten des Reaktorkerns (12) umfasst, in denen ein Neutronenverlust absichtlich zulässig ist, wobei die Kammern oder Kompartimente (60) so angepasst sind, dass Steuerelemente (90) eingesetzt und entfernt werden können, die Steuerplatten, Steuerstäbe oder Steuertrommeln umfassen.

7. Reaktor (10) nach Anspruch 6, wobei die Steuerplatten (90) aus neutronenabsorbierenden Elementen bestehen, die entweder legiert sind oder zwischen einem Satz von Platten eingebettet und zu einem Plattendesign modelliert sind, das der Form eines peripheren Bereichs der Reaktorkerngeometrie entspricht, einschließlich einer rechteckigen Platte, einer Platte mit parabolischem Querschnitt oder einer Platte mit hyperbolischem Querschnitt, und sich frei im Steuerplatten-Kompartiment bewegen können, wobei die Steuerplatte über elektromagnetische Kräfte von Elektromagneten oberhalb des Kompartiments gehalten wird.

8. Reaktor (10) nach Anspruch 6, wobei das Steuerelement (90) bei Verlust eines Steuersignals oder bei Empfang eines Abschaltsignals passiv ohne Bedienereingriff eingeführt wird.

9. Reaktor (10) nach einem der vorstehenden Ansprüche, wobei Innenflächen des primären Sicherheitsbehälters (20, 20') mit einem Neutronenreflektormaterial (52) ausgekleidet sind.

10. Reaktor (10) nach Anspruch 9, wobei das Neutronenreflektormaterial (52) Graphit ist.

11. Reaktor (10) nach Anspruch 9, wobei das Neutronenreflektormaterial (52) eines aus Berylliumoxid, Zirconiumhydrid, Yttriumhydrid, geschmolzenem Blei oder geschmolzenem Pb-Bi-Eutektikum umfasst, das in einer Hülle eingeschlossen ist, die aus einem dem Material des primären Sicherheitsbehälters (20, 20') entsprechenden Material besteht.

12. Reaktor (10) nach einem der vorstehenden Ansprüche, wobei Zielelemente, die entweder zur Erzeugung eines gewünschten Isotops oder zur Eliminierung eines Isotops dienen, entweder in dem Blanket-Salz (14) gelöst werden oder zu einem Zielelement modelliert werden, das in einen Neutronenfluss in der Blanket-Region eingeführt wird.

13. Reaktor (10) nach einem der vorstehenden Ansprüche, wobei die Blanket-Region ferner neutronenmoderierende Materialien (54, 82) umfasst, wobei die neutronenmoderierenden Materialien (54, 82) Graphitblöcke umfassen, die einer Oberflächenbehandlung mit pyrolytischem Kohlenstoff bei hoher Temperatur unterzogen wurden, um eine Oberflächenrauheit und Porosität zu reduzieren, ebenso Zirconiumhydrid oder -deuterid, Yttriumhydrid oder -deuterid, Natriumhydroxid oder -deuteroxid, Lithiumhydroxid oder -deuteroxid und Siliziumcarbid.

14. Reaktor (10) nach einem der vorstehenden Ansprüche, ferner umfassend einen Kern-Wärmetauscher (16) in Fluidverbindung mit dem Reaktorkern (12) und einen Blanket-Wärmetauscher (18) in Fluidverbindung mit der Blanket-Region; und
wobei der Reaktorkern (12) mit dem Kern-Wärmetauscher (16) über Leitungen (22) verbunden ist und das Brennstoffsalz (13) entweder durch natürliche oder erzwungene Konvektion über eine Kernpumpe (24) und/oder eine Blanket-Pumpe (26) zirkuliert wird, und das Blanket-Salz (14) durch den Blanket-Wärmetauscher (18) über die Blanket-Pumpe (26) zirkuliert wird, und Kühlmittelströme von den Kern-Wärmetauschern (16) und den Blanket-Wärmetauschern (18) zusammengeführt und durch einen sekundären Wärmetauscher zirkuliert werden;
wobei der Kern-Wärmetauscher (16) und der Blanket-Wärmetauscher (18) in den primären Sicherheitsbehälter (20, 20') eingeschlossen sind.

15. Reaktor (10) nach einem der vorstehenden Ansprüche, ferner umfassend eine abnehmbare Abdeckung (114), und wobei die abnehmbare Abdeckung (114) und der Kern (12) bearbeitete Räume bereitstellen, die Ein- und Auslassleitungen/-rohre aufnehmen, einschließlich eines Brennstoffeinlasses (118), eines Brennstoffauslasses (120), eines Blanket-Einlasses (122), eines Blanket-Auslasses (124) und einer Ablassleitung (126).

## Revendications

1. Réacteur à sel fondu à spectre mixte (10) comprenant :
une enveloppe de confinement primaire (20, 20') ;
un cœur de réacteur (12) logé dans l'enveloppe de confinement primaire (20, 20'), le cœur de réacteur (12) contenant un sel combustible (13) ; et
une zone fertile à l'intérieur de l'enveloppe de confinement primaire (20, 20') et entourant le cœur de réacteur (12), la zone fertile comprenant un sel fertile (14),
***caractérisé en ce que***
le cœur de réacteur (12) présente une géométrie atypique, laquelle géométrie atypique comprend une géométrie parallélépipédique de section transversale rectangulaire en forme de dalle, une géométrie biconcave de section transversale hyperbolique, une géométrie en sablier de section transversale hyperbolique ou une géométrie ellipsoïde de section transversale elliptique.

2. Réacteur (10) selon une quelconque revendication précédente, dans lequel le sel combustible (13) comprend un mélange d'actinides récupérés à partir d'un recyclage de combustible nucléaire usé en tant que conducteur de matière fissile, et un sel porteur comprenant un mélange de sels de chlorure ou de fluorure qui présente une solubilité élevée des halogénures d'actinides et un point de fusion suffisamment bas, dans lequel le combustible dans le sel porteur est constitué de composés d'halogénures d'uranium, de plutonium, de neptunium, d'américium et du curium dans des compositions variables et le mélange de chlorures comprend au moins un élément parmi NaCl, NaCl-KCl, et LiCl-KCl.

3. Réacteur (10) selon la revendication 2, dans lequel le mélange de fluorures comprend au moins un élément parmi LiF et LiF-NaF.

4. Réacteur (10) selon une quelconque revendication précédente, dans lequel le sel fertile (14) comprend des composés d'halogénures d'uranium naturel ou appauvri, ou du thorium en tant que matériau fertile, ou d'autres composés d'halogénures pour la transmutation.

5. Réacteur (10) selon la revendication 4, dans lequel le sel fertile (14) comprend en outre NaCl-ThCl₄, NaCl-UCl₃, LiF-ThCl₄, ou LiF-ThCl₄.

6. Réacteur (10) selon une quelconque revendication précédente, dans lequel la zone fertile comprend en outre des chambres ou des compartiments (60) sur les côtés du cœur de réacteur (12) où une fuite neutronique est intentionnellement autorisée, dans lequel les chambres ou les compartiments (60) sont conçus pour l'insertion et le retrait d'organes de contrôle (90) qui comprennent des plaques de contrôle, des barres de contrôle ou des tambours de contrôle.

7. Réacteur (10) selon la revendication 6, dans lequel les plaques de contrôle (90) sont constituées d'organes absorbant les neutrons qui sont soit alliés avec un ensemble de plaques, soit pris en sandwich entre celles-ci et façonné en une conception de plaque qui se conforme à une forme d'une zone périphérique de la géométrie du cœur de réacteur comportant une plaque rectangulaire, une plaque de section transversale parabolique, une plaque de section transversale hyperbolique, et qui peut se déplacer librement dans le compartiment de plaque de contrôle, la plaque de contrôle est maintenue au-dessus du compartiment à l'aide des forces électromagnétiques des électroaimants.

8. Réacteur (10) selon la revendication 6, dans lequel l'organe de contrôle (90) est inséré passivement sans intervention de l'opérateur une fois qu'un signal de contrôle est perdu, ou qu'un signal d'arrêt est reçu.

9. Réacteur (10) selon une quelconque revendication précédente, dans lequel les surfaces intérieures de l'enveloppe de confinement primaire (20, 20') sont revêtues d'un matériau réflecteur de neutrons (52).

10. Réacteur (10) selon la revendication 9 dans lequel le matériau réflecteur (52) est du graphite.

11. Réacteur (10) selon la revendication 9, dans lequel le matériau réflecteur de neutrons (52) comprend un des matériaux parmi l'oxyde de béryllium, l'hydrure de zirconium, l'hydrure d'yttrium, le plomb fondu ou l'eutectique Pb-Bi fondu qui est enfermé dans un revêtement constitué d'un matériau qui correspond à l'enveloppe de confinement primaire (20, 20').

12. Réacteur (10) selon une quelconque revendication précédente, dans lequel les éléments cibles, soit pour la production d'un isotope désiré, soit pour l'élimination d'un isotope, sont soit dissous dans le sel fertile (14), soit façonnés en une cible qui est introduite dans un flux de neutrons dans la zone fertile.

13. Réacteur (10) selon une quelconque revendication précédente, dans lequel la zone fertile comprend en outre des matériaux modérateurs de neutrons (54, 82), dans lequel les matériaux modérateurs de neutrons (54, 82) comprennent des blocs de graphite soumis à un traitement de surface avec du carbone pyrolytique à haute température pour réduire la rugosité et la porosité de surface, de l'hydrure ou du deutériure de zirconium, de l'hydrure ou du deutériure d'yttrium, de l'hydroxyde ou du deutéroxyde de sodium, de l'hydroxyde ou du deutéroxyde de lithium et du carbure de silicium.

14. Réacteur (10) selon une quelconque revendication précédente, comprenant en outre un échangeur de chaleur du cœur (16) en communication fluidique avec le cœur de réacteur (12) et un échangeur de chaleur du circuit fertile (18) en communication fluidique avec la zone fertile ; et
dans lequel le cœur de réacteur (12) est relié à l'échangeur de chaleur du cœur (16) par des conduits (22), le sel combustible (13) étant mis en circulation par convection naturelle ou forcée par l'intermédiaire d'une pompe du cœur (24) et/ou d'une pompe du circuit fertile (26), et le sel fertile (14) étant mis en circulation à travers l'échangeur de chaleur du circuit fertile (18) par l'intermédiaire de la pompe du circuit fertile (26), et les flux de liquide de refroidissement provenant à la fois des échangeurs de chaleur du cœur (16) et des échangeurs de chaleur du circuit fertile (18) sont combinés et mis en circulation dans un échangeur de chaleur secondaire ;
dans lequel l'échangeur de chaleur du cœur (16) et l'échangeur de chaleur du circuit fertile (18) sont enfermés dans l'enveloppe de confinement primaire (20, 20').

15. Réacteur (10) selon l'une quelconque des revendications précédentes, comprenant en outre un couvercle amovible (114), et où le couvercle amovible (114) et le cœur (12) fournissent des espaces usinés qui reçoivent des conduits/tuyaux d'entrée et de sortie comportant une entrée de combustible (118), une sortie de combustible (120), une entrée du circuit fertile (122), une sortie du circuit fertile (124) et un drain (126).
